# EUROPEAN PATENT APPLICATION

(11) **EP 3 156 963 A1**
(43) Date of publication of application: **19.04.2017**
(21) Application number: 15736369.8
(22) Date of filing: 11.06.2015
(51) Int. Cl.: G06Q 50/10

(54) **METHOD, APPARATUS AND COMPUTER-READABLE MEDIUM FOR PROVIDING DART GAME MATCH MODE**

(30) Priority: 10.07.2014 KR 20140086608
(71) Applicant: Hong International Corp., Seoul 152-848 (KR)
(72) Inventor: HONG, Sang Uk, Seoul 135-100 (KR)
(74) Representative: Concone, Emanuele
(86) International application number: PCT/KR2015/005878
(87) International publication number: WO 2016/006832

(57) **Abstract**

Disclosed is a dart game apparatus providing a dart game match-up mode. The dart game apparatus may include: a control module providing a dart game match-up mode among a plurality of teams each constituted by one or more players; and a display module outputting a dart game image in the dart game match-up mode.

## Description

### [Technical Field]

The present invention relates to a dart game apparatus, and more particularly, to provide a dart game match-up mode to a user by forming a team with a virtual player.

### [Background Art]

In general, a dart refers to a 'small arrow' and is a game that makes marks by throwing an arrow-shaped dart to a centrifugal target marked with figures. The dart game has an advantage that whoever can enjoy the dart game anytime anywhere if there are an arrowheaded dart and the dart target. In recent years, while various game methods have been developed and a scoring method is arranged, and as a result, the dart game has been developed as worldwide leisure, all adults and children have conveniently enjoyed the dart game.

In general, participants of the dart game need to participate in the game at the same time and in the same space in order to enjoy the dart game. However, with development of communication technology, have been developed electronic dart game apparatuses in which each of the participants of the dart game may remotely participate in the dart game so as to participate in the game over temporal and spatial constraints and remotely transmit a play result or a play process thereof through a communication network. The electronic dart game apparatuses may electrically sense a hitting point of the dart target and automatically aggregate scores and provide the aggregated scores to a player.

In the dart game, the game is played for each player or by a team constituted by two or more players and resulting scores are aggregated to determine winning or losing. Therefore, competition among individual or team players may be a primary factor of the game.

Therefore, the need for a virtual dart game match-up mode may be present in the art in order to intensify an interesting element to be absorbed in the game while playing the dart game.

### [Disclosure]

### [Technical Problem]

The present invention is contrived to correspond to the aforementioned background art and the present invention is to provide a dart game match-up mode in a dart game apparatus.

The present invention is to provide a new entertainment aspect of a dart game to a player by providing the dart game match-up mode.

The present invention is to provide the dart game match-up mode to form a team with a virtual dart game player to the player.

The present invention is to provide to the player the dart game match-up mode to play the game regardless of the number of persons by providing the virtual dart game player to the player of the dart game match-up mode.

### [Technical Solution]

In order to achieve the aforementioned object, disclosed is an electronic dart game apparatus that may provide a dart game match-up mode to a user according to an embodiment of the present invention. The apparatus may include: a control module providing a dart game match-up mode among a plurality of teams each constituted by one or more players; and a display module outputting a dart game image in the dart game match-up mode. The dart game match-up mode may be a dart game mode in which at lest one among the players includes a virtual game player.

Further, according to an embodiment of the present invention, disclosed a method for providing a team dart game match-up mode in a dart game apparatus. The method may include: making a player of a dart game match-up mode include at least one virtual dart game player; constituting a plurality of teams each constituted by one or more players; performing the dart game match-up mode among the plurality of teams; and outputting a dart game image in the dart game match-up mode.

Additionally, disclosed is a computer-readable medium storing commands allowing a computer to provide a team dart game match-up mode. The commands may include: a command for allowing the computer to make a player of a dart game match-up mode include at least one virtual dart game player; a command for allowing the computer to constitute a plurality of teams each constituted by one or more players; a command for allowing the computer to perform the dart game match-up mode among the plurality of teams; and a command for allowing the computer to output a dart game image in the dart game match-up mode.

### [Advantageous Effects]

The present invention is contrived to correspond to the aforementioned background art and the present invention is to provide a dart game match-up mode in a dart game apparatus.

The present invention is to provide a new entertainment aspect of a dart game to a player by providing the dart game match-up mode.

The present invention is to provide the dart game match-up mode to form a team with a virtual dart game player to the player.

The present invention is to provide to the player the dart game match-up mode to play the game regardless of the number of persons by providing the virtual dart game player to the player of the dart game match-up mode.

### [Description of Drawings]

Various aspects are hereinafter disclosed with reference to drawings and herein, similar reference numerals are used to designate generally similar elements. In following embodiments, for the purpose of description, multiple specific details are presented to provide general understanding of one or more aspects. However, it will be apparent that the aspect(s) can be performed without the concrete details. In other examples, known structures and devices are illustrated in a block diagram form in order to facilitate description of one or more aspects.
FIG. 1 is a block diagram of a dart game apparatus according to an embodiment of the present invention.
FIG. 2 is a perspective view of the dart game apparatus according to the embodiment of the present invention.
FIG. 3 is a conceptual diagram of a dart game network including a plurality of dart game apparatuses and servers according to the embodiment of the present invention.
FIG. 4 illustrates a dart target according to the embodiment of the present invention.
FIG. 5 illustrates a dart game image displayed in a display module according to an embodiment of the present invention.
FIG. 6 illustrates a dart game image displayed in a display module according to another embodiment of the present invention.
FIG. 7 illustrates a dart game image displayed in a display module according to yet another embodiment of the present invention.
FIG. 8 illustrates a dart target for describing a method that calculates a score in a dart game match-up mode according to an embodiment of the present invention.
FIG. 9 illustrates a method for providing a dart game match-up mode according to an embodiment of the present invention.

### [Best Mode]

Various embodiments will now be described with reference to the drawings and similar reference numerals are used to represent similar elements throughout the drawings. For description, in the specification, various descriptions are presented to provide appreciation of the present invention. However, it is apparent that the embodiments can be executed without the specific description. In other examples, known structures and apparatuses are presented in a block diagram form in order to facilitate description of the embodiments.

"Component", "module", "system", and the like which are terms used in the specification designate a computer-related entity, hardware, firmware, software, and a combination of the software and the hardware, or execution of the software. For example, the component may be a processing process executed on a processor, the processor, an object, an execution thread, a program, and/or a computer, but is not limited thereto. For example, both an application executed in a computing device and the computing device may be the components. One or more components may reside in the processor and/or execution thread and one component may be localized in one computer or distributed among two or more computers. Further, the components may be executed by various computer-readable media having various data structures, which are stored therein. The components may perform communication through local and/or remote processing according to a signal (for example, data through other system and a network such as the Internet through data and/or a signal from one component that interacts with other components in a local system and a distribution system) having one or more data packets, for example.

The description of the presented embodiments is provided so that those skilled in the art of the present invention use or implement the present invention. It will be apparent to those skilled in the art that various modifications of the embodiments will be apparent to those skilled in the art and general principles defined herein can be applied to other embodiments without departing from the scope of the present invention. Therefore, the present invention is not limited to the embodiments presented herein, but should be analyzed within the widest range which is associated with the principles and new features presented herein.

"Dart" and "dart pin" which are terms used in the specification may be often used to be exchanged with each other. Furthermore, "player" and "user" which are terms used in the specification may be often used to be exchanged with each other. Furthermore, "point" and "zone" which are terms used in the specification may be often used to be exchanged with each other.

Furthermore, "display" and "monitor" which are terms used in the specification may be often used to be exchanged with each other.

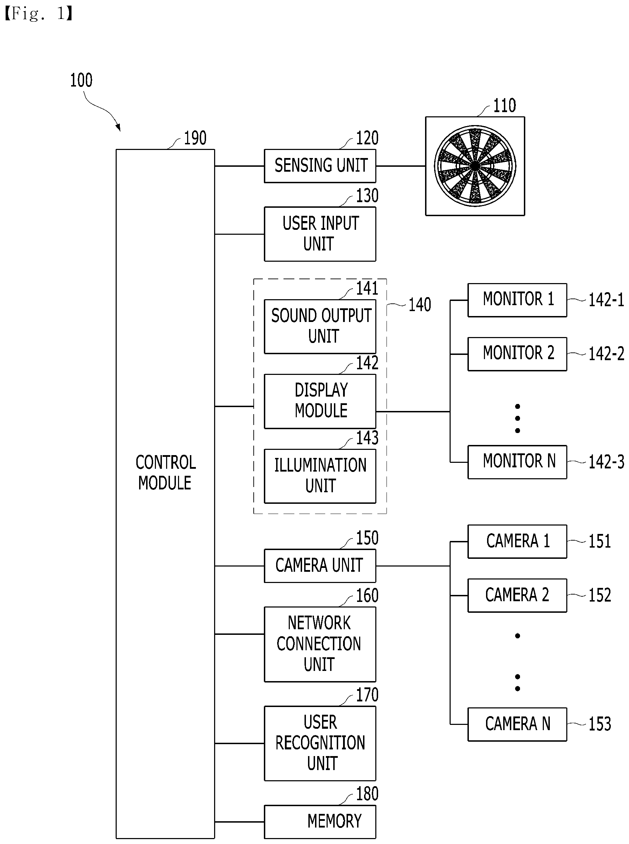

FIG. 1 is a block diagram of a dart game apparatus according to an embodiment of the present invention.

A dart game apparatus 100 may include a dart target 110, a sensing unit 120, a user input unit 130, an output unit 140, a camera unit 150, a communication module 160, a user recognition unit 170, a memory 180, a control module 190, and the like. The components illustrated in FIG. 1 are not essential components. Therefore, a mobile terminal having more components therethan or less components therethan may be implemented.

Hereinafter, the components will be described in sequence.

The dart target 110 may include a score board in which a bullseye is positioned at the center and there are areas segmented by a concentric circle centering the bullseye and straight lines extended radially from the bullseye and granted with individual scores, respectively. Multiple holes into which a tip of a dart may be inserted may be formed on the score board.

The dart target 110 includes a display module 142 to be described below to variably change score deployment of the dart target 110 and shapes of areas granted with the scores. In this case, the dart target 110 includes an optical transmissive touch pad stacked on the display module 142 to have a form of a touch screen.

The sensing unit 120 senses a play of a dart game player performed with respect to the dart target 110. The sensing unit 120 may sense a hit location of a dart pin so as to actually evaluate the play of the game player. The sensing unit 120 may sense which area of the dart target 110 the thrown dart hits, with respect to a play in which the game player throws the dart. The sensing unit 120 electrically converts a score corresponding to the area which the dart hits to transmit the converted score to the control module 190.

The user input unit 130 receives an input of a user for controlling the dart game apparatus 100. The user input unit 130 may include a keypad, a dome switch, a touch pad (resistive/capacitive), a jog wheel, a jog switch, and the like. The user input unit 130 may also include cameras 151 to 153, a microphone, or the like.

The user input unit 130 may also include a short range communication module (not illustrated). The user input unit 130 may be configured by including the short range communication module (not illustrated) of the communication module 160. When the user input unit 130 includes the short range communication module of the communication module 160, the user input unit 130 may be configured to receive a user's input which is input by an external console device. As short range communication technology, Bluetooth, radio frequency identification (RFID), infrared data association (IrDA), ultra wideband (UWB), ZigBee, or the like may be used.

For example, when the user input unit 130 performs the short range communication using infrared communication, the external console device may be an infrared remote controller. Alternatively, when the user input unit 130 performs the short range communication using a Bluetooth function, the external console device may be a mobile device including a Bluetooth module. The mobile device including the Bluetooth module may be, for example, a smart phone including a Bluetooth module.

The user may select a dart game scheme, the number of dart game players, a dart game play scheme, and the like through the user input unit 130. For example, the user may select the number of dart game players, the dart game play scheme (a zero one game, a cricket game, and the like), and the dart game mode (a single play, a network play, and the like) through the user input unit 130. Further, according to an embodiment of the present invention, the user may select a virtual dart game player through the user input unit 130.

The user input unit 130 receives a signal by sensing a key operation or a touch input of the user or receives voice or a motion through the cameras 151 to 153 or the microphone of the user to convert the received signal, voice, or motion into an input signal. To this end, known speech recognition or motion recognition technologies may be used.

The output unit 140 which is used for generating an output related with sight, hearing, or touch may include a sound output unit 141, a display 142, an illumination unit 143, and the like.

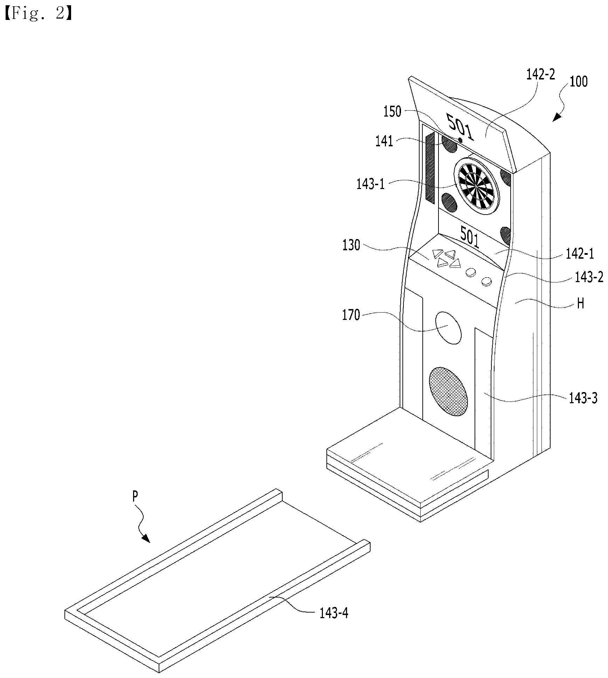

The sound output module 141 may output audio data received from the communication module 160 or stored in the memory 180 in a game sound effect, a game motion guide, a game method description, and the like. The sound output module 141 may also output a sound signal related with a function (e.g., a game effect sound) performed by the dart game apparatus 100. The sound output module 141 may also output a voice of a game player or a third person using another dart game apparatus 200 (see FIG. 2) received through the communication module 160. The sound output module 141 may include a receiver, a speaker, a buzzer, and the like.

The display module 142 may display (output) information processed in the dart game apparatus 100. For example, when the dart game apparatus 100 is in a game play scheme guide mode, the display module 142 may output a selectable game play scheme. When the dart game apparatus 100 is in a game play, the display module 142 may output an image acquired by recording the game player or the third person using another dart game apparatus 200 (see FIG. 2) received through the communication module 160.

Further, the display module 142 may display a dart game image. According to an embodiment of the present invention, the dart game image may include a dart game play image of a real person, a dart game play animation image of a character of the real person, a dart game play animation image of a virtual character, and an image in which an image in which dart pins are hit on the dart target is displayed for each team.

Further, the display module 142 may include a plurality of monitors 142-1, 142-2, and 142-3. According to another embodiment of the present invention, a first monitor outputs the dart game play image and a second monitor may output a dart game image related with the dart game play image output from the first monitor, or each monitor may output the dart game image for each team. The plurality of monitors 142-1, 142-2, and 142-3 included in the display module 142 will be described below.

The display module 142 may include at least one of a liquid crystal display (LCD), a thin film transistor-liquid crystal display (TFT LCD), an organic light-emitting diode (OLED), a flexible display, and a 3D display.

Among the displays, some displays may be configured as a transparent or optical transmissive type to view the outside through some displays. This may be called a transparent display and a representative example of the transparent display includes a transparent OLED (TOLED), and the like.

According to an implementation form of the dart game apparatus 100, the display module 142 may include a plurality of monitors. For example, in the dart game apparatus 100, the plurality of monitors may be separated from each other on one surface or integrally deployed, and further, deployed on different surfaces. For example, the monitor 142 may include both a monitor 142 deployed at an upper end of the dart target 110 and a monitor deployed at a lower end of the dart target 110, or may include one monitor 142 thereof. However, a location where the aforementioned monitors are deployed is an example, and the monitor may be deployed at various positions for a demand due to a design or a visual effect.

A touch sensor may be configured to convert a change in pressure applied to a specific portion of the display module 142 or capacitance generated at the specific portion of the display module 142 into an electrical input signal. The touch sensor may be configured to detect pressure in touch as well as touched location and area.

When there is a touch input for the touch sensor, a signal(s) corresponding to the touch input is sent to a touch controller. The touch controller processes the signal(s) and thereafter, transmits data corresponding thereto to the control module 190. As a result, the control module 190 may determine which area of the display module 142 is touched.

The illumination unit 143 outputs a signal for notifying occurrence of an event of the dart game apparatus 100. Examples of the event which occurs from the dart game apparatus 100 include identification of the dart game player, direct hit of the dart, a change of the dart game player, game over, and the like. The illumination unit 143 may include a light emission diode (LED) and notify the occurrence of the event to the user through flickering of the LED.

The LEDs are deployed on the bottom of the dart target 110 to be flickered according to a flickering pattern which is pre-stored according to the occurrence of the event. For example, one or more LEDs may be allocated to respective parts of the dart target 110. The allocated LEDs are deployed on the bottom of the dart target 110 and may be deployed in a direction orienting the outside of the dart game apparatus 100. When the LEDs irradiate light, the light irradiated by the LEDs may pass through the dart target 110 made of a transparent or translucent material to transfer a visual output to the user. Alternatively, the light irradiated by the LEDs may transfer the visual output to the user through a gap existing in the dart target 110.

The output unit 140 may also output another form other than a video signal or an audio signal, for example, a signal for notifying the occurrence of the event by vibration.

The camera unit 150 includes multiple cameras 151 to 153, and as a result, an image frame processed by the cameras 151 to 153 may be stored in the memory 180 or transmitted to the outside through the communication module 160. Two or cameras 150 may be provided according to a use environment.

At least some cameras of the camera unit 150 may be deployed to record an image frame including the dart target 110 and other some cameras may be deployed to record an image frame directly related with a game rule in the dart game play. For example, the camera may be deployed to record a throw-line on which the dart is thrown in order to record the image frame directly related with the dart game rule. The multiple cameras 151 to 153 included in the camera unit 150 may be deployed to record at least some image frames to overlap with each other.

When the camera unit 150 includes one camera, the camera may be a panorama camera deployed to record both at least a part of the dart target 110 and the image frame (e.g., the throw-line in the dart game) directly related with the game rule.

The communication module 160 may include one or more modules that enable wireless communication between the dart game apparatus 100 and a wired/wireless communication system or between the dart game apparatus 100 and a network on which the dart game apparatus 100 is positioned.

The communication module 160 may include a wired/wireless Internet module for accessing the network. As the wireless Internet technology, wireless LAN (WLAN) (Wi-Fi), wireless broadband (Wibro), world interoperability for microwave access (Wimax), high speed downlink packet access (HSDPA), or the like, may be used. As wired Internet technology, digital subscriber line (XDSL), fibers to the home (FTTH), power line communication (PLC), or the like may be used.

Further, the communication module 160 includes a short range communication module to transmit and receive data to and from an electronic apparatus positioned in a relatively short range to the dart game apparatus 100 and including the short range communication module. As short range communication technology, Bluetooth, radio frequency identification (RFID), infrared data association (IrDA), ultra wideband (UWB), ZigBee, or the like may be used.

The communication module 160 may sense a connection state of the network and a transceiving speed of the network.

Data received through the communication module 160 may be output through the output unit 140, stored through the memory 180, or transmitted to other electronic apparatuses positioned in a short range through the short range communication module. According to an embodiment of the present invention, the dart game apparatus 100 may provide a dart game match-up mode including at least one player which plays the game at a remote area through the communication module 160.

The user recognition unit 170 recognizes unique information of a long-range user by using a radio wave through the radio frequency identification (RFID) which is a kind of the short range communication technology. For example, the user may possess a card, a mobile terminal, or unique dart game equipment, for example, user's own personal dart equipment, which includes an RFID module. Information (e.g., a personal ID, an identification code, and the like of the user registered in the database server (DB) (see FIG. 2) for identifying the user may be recorded in the RFID module possessed by the user. The dart game apparatus 100 may identify the RFID module possessed by the user to identify a dart game player which plays the game by using the dart game apparatus 100 and update a database for the identified dart game player or accumulate new data.

The user recognition unit 170 may include various technologies (e.g., the short-range communication technology such as the Bluetooth, and the like) that may transmit and receive unique information of the user by a contact/non-contact method in addition to the RFID technology. Further, the user recognition unit 170 may include a biodata identification module that identifies biodata (voice, a fingerprint, and a face) of the user by interworking with the microphone of the user input unit 130, the touch pad, the camera unit 150, and the like.

The memory 180 may store a program for an operation of the control module 190 therein and temporally store input/output data (e.g., a phone book, a message, a still image, a moving picture, or the like) therein. The memory 180 may store data regarding various pattern vibrations and sounds output in the touch input on the touch screen.

The memory 180 may include at least one storage medium of a flash memory type storage medium, a hard disk type storage medium, a multimedia card micro type storage medium, a card type memory (for example, an SD or XD memory, or the like), a random access memory (RAM), a static random access memory (SRMA), a read-only memory (ROM), an electrically erasable programmable read-only memory (EEPROM), a programmable read-only memory (PROM), a magnetic memory, a magnetic disk, and an optical disk. The dart game apparatus 100 may operate in connection with a web storage performing a storing function of the memory 180 on the Internet.

Further, according to an embodiment of the present invention, the memory 180 may store information regarding a virtual dart game player. In the information, rating (ranking and level) information of the virtual dart game player, dart game play image information, preference information of the virtual dart game player, profile information of the virtual dart game player, accuracy rate information of the virtual dart game player, or the like may be included. The disclosure is just an example, and information required for implementing the virtual dart game player may be stored in the memory 180. The preference information of the virtual dart game player may mean a play scheme of a player which plays a dart game such as "lack of persistence" and "weakness in tension". The "lack of persistence" may mean a case where the accuracy rate of the virtual dart game player is increased in the early stage of the game and then decreased in the late part of the game. The "weakness in tension" may mean a case where the accuracy rate of the virtual dart game player is decreased in the moment of tension such as a reverse chance. The preference information of the aforementioned virtual dart game player is just an example and may include a game play scheme which may be viewed by a dart game player. Further, the memory 180 may download and store information regarding the virtual dart game player stored in the server. Further, the dart game apparatus 100 may read the information regarding the virtual dart game player stored in the server.

The control module 190 may generally control the overall operation of the dart game apparatus 100. For example, in the case of the dart game, the score sensed through the sensing unit 120 is collected for each game participant, the collected score is transmitted to and received from another dart game apparatus 200 connected through the network, and a game winning/losing record, the score, and the like according to the collected result are recorded.

Further, according to an embodiment of the present invention, the control module 190 may provide a dart game match-up mode between a plurality of teams configured by at least one player. The dart game match-up mode may be a dart game mode including at least one virtual dart game player among the players. Further, the team is configured by at least one player, and each team may include at least one virtual dart game player.

Further, according to another embodiment of the present invention, the control module 190 may calculate the score based on at least a part of a hit location of the dart pin of another team in the dart game match-up mode.

Further, according to another embodiment of the present invention, the control module 190 or a dart game server may select a virtual dart game player. The virtual dart game player may be randomly selected or select based on at least a part of information of the dart game player of each team. Further, the control module 190 may select the virtual dart game player through user's selection received through the user input unit 130.

The control module may perform pattern recognition processing to recognize a motion input, a writing input, and the like performed on the touch screen or the camera as a letter or an image. Further, the control module may perform speech recognition by using a speech-to-text (STT) function to recognize the speech input through the microphone as the letter.

Various embodiments described herein may be implemented in a computer-readable recording medium or a recording medium readable by a device similar to the computer by using, for example, software, hardware, or a combination thereof.

According to hardware implementation, the embodiment described herein may be implemented by using at least one of ASICs (application specific integrated circuits), DSPs (digital signal processors), DSPDs (digital signal processing devices), PLDs (programmable logic devices), FPGAs (field programmable gate arrays, processors, controllers, micro-controllers, microprocessors, and electric units for performing other functions. In some cases, the embodiments described in the specification may be implemented by the control module 190 itself.

According to software implementation, embodiments such as a procedure and a function described in the specification may be implemented by separate software modules. Each of the software modules may perform one or more functions and operations described in the specification. A software code may be implemented by a software application written by an appropriate program language. The software code may be stored in the memory 180 and executed by the control module 190.

FIG. 2 is a perspective view of a dart game apparatus according to an embodiment of the present invention.

As illustrated in FIG. 2, the dart game apparatus 100 according to the embodiment of the present invention may be formed by mounting components illustrated in FIG. 1 in a housing H. A dart target 110, a display 142, an illumination unit 143, a sound output unit 141, a camera unit 150, and a user recognition unit 170 may be deployed on the front surface of the dart game apparatus 100.

The dart target 110 may be deployed so that a dead centre is positioned at a position (for example, 5 feets 8 inches in a vertical direction of the ground) suitable for a rule of the dart game. The illumination units 143-1, 143-2, and 143-3 may be deployed at various parts of the dart game apparatus 100 to transfer a visual effect to the player of the dart game apparatus 100.

For example, the illumination unit 143-1 is deployed at the side of the dart target 110 and may serve to irradiate an illumination to the dart target 110. The illumination unit 143-1 may output a predetermined illumination effect according to an event of the dart game. Further, the illumination unit 143-1 may output illumination effects having various colors.

The illumination unit 143-2 may be formed to be extended in a vertical direction along a forward projection of the housing H. Like the illumination unit 143-1, the illumination unit 143-2 may output a predetermined illumination effect according to an event of the dart game and output illumination effects having various colors.

The illumination unit 143-3 may be deployed at the side of the user recognition unit 170. The illumination unit 143-3 may output a predetermined illumination effect according to an event of the dart game and output illumination effects having various colors. Particularly, the illumination unit 143-3 may output an illumination effect for an event related with the user recognition unit 170.

Selectively, the dart game apparatus 100 may include a dart plate P which may be selectively connected with the dart game apparatus 100 and extended in a horizontal direction. The dart plate P may further include an illumination unit 143-4. The dart plate P may be integrally coupled with or selectively attached to or detached from the dart game apparatus 100.

When the dart plate P is integrally coupled with or selectively attached to the dart game apparatus 100, the dart plate P may be electrically connected with the dart game apparatus 100. The illumination unit 143-4 of the dart game apparatus 100 may be deployed along the outside of the dart plate P as illustrated in FIG. 2. One end of the dart plate P may be extended from the dart target to a place where a throw-line is to be positioned along a distance of the throw-line according to a rule of the game. The illumination unit 143-4 may be deployed at a position corresponding to the throw-line.

Although not illustrated in FIG. 2, an illumination unit (not illustrated) is deployed at the bottom of the dart target 110 to irradiate an illumination effect in a user direction. The illumination unit (not illustrated) may include a combination of different illumination elements allocated according to each segment configuring the dart target.

The housing H of the dart game apparatus 100 may include a display 142 deployed in the user direction. The display 142 may display information required to the user according to the progress of the dart game (for example, a collected score, information on a player during playing, a score required for clearing the corresponding game, information of a counterpart player which is not during playing, a dart game image, and the like). The display 142 may display a visual effect according to an event depending on the progress of the dart game. For example, when the user continuously hits a bullseye at the dead centre of the dart target 110 at three dart throw chances, the display 142 may display a pre-stored motion picture corresponding to the corresponding event. The motion picture may be stored in the memory 180 of the dart game apparatus 100 or received from a server through the communication module 160.

The display 142 may provide visual and audible effects according to occurrence of the event by interlocking with the illumination units 143-1, 143-2, 143-3, and 143-4 and the sound output unit 140 to the user. In other words, when a predetermined event occurs, the display 142, the illumination units 143-1, 143-2, 143-3, and 143-4, and the sound output unit 140 may output an illumination effect, a display effect, and a sound effect with respect to the corresponding event.

In FIG. 2, it is illustrated that the displays 142 are deployed at the lower end and the upper end of the dart target 110, but the number and deployed positions of displays 142 may be variously modified. In an embodiment of the present invention, the display module 142 may include a plurality of monitors 142-1, 142-2, and 142-3.

The user input unit 130 may be configured in a key pad button form as illustrated in FIG. 2. However, as described above, the user input unit 130 may be configured by various types including a touch screen. The user operates a key button of the user input unit 130 to select a mode of a game to be played by the user, a virtual dart game player to be played by a team, and the like.

The sound output unit 141 is deployed on the front surface of the housing H of the dart game apparatus 100 to output a sound. The number and deployed positions of sound output units 141 may also be variously modified.

The camera unit 150 may be mounted on the housing H of the dart game apparatus 100 as illustrated in FIG. 2. The camera unit 150 may include one or more cameras 151, 152, ..., 153 which may record the dart target 110 and the throw line. The image recorded through the camera unit 150 may be transferred to the memory 180. According to an embodiment, only some of the motion pictures recorded by the camera unit 150 may be finally stored in the memory 180 or transferred to a server (not illustrated) through the communication module 160.

The user recognition unit 170 may be deployed on the front surface of the housing H of the dart game apparatus 100 and include a short range communication module as illustrated in FIG. 2. The user touches a card for recognizing the user near the user recognition unit 170 to complete user authentication. According to an embodiment of the present invention, the control module 190 or the dart game server may select a virtual dart game player based on at least a part of information on the authenticated player. For example, the control module 190 may select a virtual dart game player having the same competition power as the corresponding player based on ranking information of the authenticated player. Further, the control module 190 may select a virtual dart game player which may offset a difference in capacity for an actual player for each team based on the information of the player for each team.

The contents illustrated in FIG. 2 and the description of the exterior of the aforementioned dart game apparatus 100 are just an example proposed for description, and the dart game apparatus 100 according to the present invention is not limited to the exterior illustrated in FIG. 2.

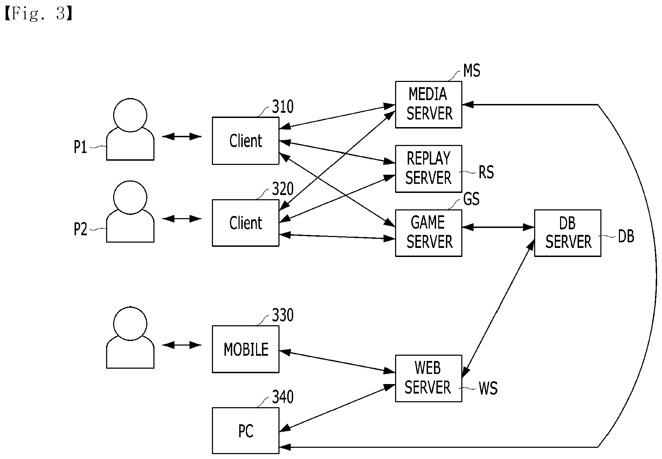

FIG. 3 is a conceptual diagram of a game network including a dart game apparatus according to an embodiment of the present invention.

As illustrated in FIG. 3, the dart game apparatus 100 used by a first game player P1 may be connected with one or more servers (a media server MS, a relay server RS, and a dart game server GS) through the network.

Multiple dart game players may enjoy the dart game in the same space at the same time by using the same first dart game apparatus 100. However, when a second dart game player P2 positioned at a remote range from the first dart game player P1 intends to participate in the dart game, the second dart game player P2 is connected with one or more servers (the media server MS, the relay server RS, and the dart game server GS) through the network by using the second dart game apparatus 100 to transmit and receive information to and from the first dart game apparatus 100, thereby performing the dart game. The first dart game apparatus 100 and the second dart game apparatus may transmit and receive information via one or more servers (the media server MS, the relay server RS, and the dart game server GS) or directly transmit and receive the information between the dart game apparatuses 100 and 200.

According to an embodiment of the present invention, the dart game apparatuses 100 and 200 may provide a dart game match-up mode including at least one player which plays the game at a remote area through the communication module.

The dart game may be performed by differentiating places at which both dart game players P1 and P2 play the game at the same time or performed by a method in which both dart game players P1 and P2 plays the dart game at different places at different time and decides winning/losing or a ranking by storing play contents in the DB server DB.

Further, according to an embodiment of the present invention, information regarding a virtual dart game player may be stored in the DB server. In the information, rating (ranking and level) information of the virtual dart game player, dart game play image information, preference information of the virtual dart game player, profile information of the virtual dart game player, accuracy rate information of the virtual dart game player, or the like may be included. The disclosure is just an example, and information required for implementing the virtual dart game player may be stored in the DB server. The preference information of the virtual dart game player may mean a play scheme of a player which plays a dart game such as "lack of persistence" and "weakness in tension". The "lack of persistence" may mean a case where the accuracy rate of the virtual dart game player is increased in the early stage of the game and then decreased in the late part of the game. The "weakness in tension" may mean a case where the accuracy rate of the virtual dart game player is decreased in the moment of tension such as a reverse chance. The preference information of the aforementioned virtual dart game player is just an example and may include a game play scheme which may be viewed by a dart game player.

The media server MS may store dart game play moving pictures of the dart game players P1 and P2, which are stored by using the camera or the microphone stored in the dart game apparatuses 100 and 200. The media server MS may be included in the DB server DB.

The relay server RS connects communication between the multiple dart game apparatuses 100 and 200. The relay server RS forms a communication network between the multiple dart game apparatuses 100 and 200 positioned at the remote range to form a peer-to-peer (P2P) network.

The game server GS may exchange information (a score acquired by each game player and information for mutual communication among the respective game players) between the dart game apparatuses 100 and 200, transmit an advantage or a warning based on a game rule through the respective dart game apparatuses 100 and 200, or perform other transmission and reception of information required to perform the dart game and controlling the dart game apparatuses 100 and 200. The dart game server GS aggregates winning/losing of the dart game and scores of the respective dart game players P1 and P2 to transmit the aggregated winning/losing and scores to the DB server. Further, according to an embodiment of the present invention, the dart game server GS may select players and virtual dart game players configuring a team.

The DB server may store personal information of the respective dart game players P1 and P2, winning/losing and ranking information of the game, score information for each game, or a replay moving picture for each game. The DB server may store the information segmented for each user. The DB server may grant a unique code to each user and manage information for each user by using the unique code. The unique code may be stored in the RFID module (an RFID card or an RFID module stored in the mobile terminal) possessed by each user. As a result, the game apparatuses 100 and 200 may identify each game player through the included user recognition unit 170. The DB server may also grant the unique code for identification even to the respective dart game apparatuses 100 and 200 and manage the dart game data for each identification code granted to the dart game apparatuses 100 and 200.

The game player may access a web server WS by using a mobile 300 (including electronic apparatuses such as a mobile terminal, a cellular phone, a PDA, a PDP, and the like, which have a mobile communication function) or a PC 400. The web server WS may be connected with the mobiles 300 and 400 by an Internet or an Intranet. Further, the web server WS may be connected even with the dart game apparatuses 100 and 200. The web server WS is connected with the DB server DB to provide the dart game data stored in the DB server to the dart game player.

Hereinafter, a representative rule of the dart game and stats of the player associated therewith will be described.

The dart game which may be executed the dart game apparatus 100 according to the embodiment of the present invention may include a 01 game (zero-one game) a cricket game, a count-up game, a match-up mode, and the like.

The 01 game is performed by two teams (alternatively, two players) drawing the dart to the dart target alternately one by one round. One round includes three dart drawing operations. An object of the game is that sum-up of scores in each round reaches a target score (a score of the unit of 100 or 1000 that generally ends with 01, such as 301, 501, 701, 901, 1101, 1501 points, and the like). The target score and a play round may be arbitrarily adjusted according to the number of players that participate in the round.

In the cricket game, the round is performed by drawing three darts in a first round similarly to the 01 game. The standard cricket game may be performed by using only a bullseye zone at the center of the dart target, and 20, 19, 18, 17, 16, and 15 point zones. When the corresponding cricket figures are hit with 3 marks, this is marked as a position of the player and when the corresponding cricket figures are hit with 4 marks or more, scores corresponding to the figures are added up to compete the scores. Herein, double zones and triple zones of the dart target may be calculated with 2 marks and 3 marks, respectively. While the corresponding cricket figure is marked as the position of the player, when a counterpart of the player also marks 3 cricket figures, the corresponding cricket figure is regarded to be closed and no score may be added up longer. The object of the game may be set to acquire a high score until a regulation round ends or close all cricket figures and a higher score than the counterpart.

The count-up game is a game which the player win the victor when acquiring a high score within a predetermined round.

In addition to the aforementioned games, various types of games may be played by the dart game apparatus 100 and the play mode of the dart game apparatus 100 is not limited to the aforementioned game schemes.

The stats of the player may be defined according to the corresponding game rule independently from the winning or losing of the count-up game, the cricket game, and the 01 game.

For example, points per dart (PPD) may be calculated by dividing a total score which the player earns by the number of dart drawing times in the 01 game.

Alternatively, marks per round (MPR) may be calculated by calculating the number of marking times of the player in one round. For example, in the cricket game, when the player performs three dart drawing operations in one round and the darts hit 15 triple, 19 single, and 20 double bulls in the three dart drawing operations, respectively, the MPR becomes (3 + 1 + 2)/1 = 6.00 (MPR).

In a subsequent round, when the player performs three dart drawing operations and the dart hit mark fail, 18 double, and 20 bullseye in the three dart drawing operations, the MPR becomes (3 + 1 + 2 + 0 + 2+ 1)/2 =4.5 (MPR).

The PPD and the MPR the stats of the player may also be stored as personal data of the player. Alternatively, in the count-up game, an average score of the player per game, a highest score record of the player per game, and the like may be stored as the stats of the player.

The dart game apparatus 100 may play the dart game according to the corresponding mode and transmit a game record per player to a game server GS or a DB server DB. The game server GS or DB server DB may calculate the PPD and/or MPR for each player according to the corresponding game record and store the calculated PPD and/or MPR as accumulated PPD and/or MPR stats of the player. Further, the game server GS or the DB server DB may individually store the game record of the player. For example, in the 01 game, the count-up game, or the cricket game which the player played in the past, the player may record information on a segment part of a dart which hits each dart draw. The game server GS or DB server DB may store accumulated (average) PPD and/or MPR data and highest PPD and/or MPR data of the player.

The game server GS or the DB server DB may be two physically separated servers. Alternatively, the game server GS or the DB server DB may be one physically integrated server and be distinguished according to roles performed in the server. Further, as described above, one server may serve as both the game server GS and the DB server DB.

The game server GS or the DB server DB may store personal stats of the player and rating (alternatively, grade) may be granted to the player according to the corresponding stats.

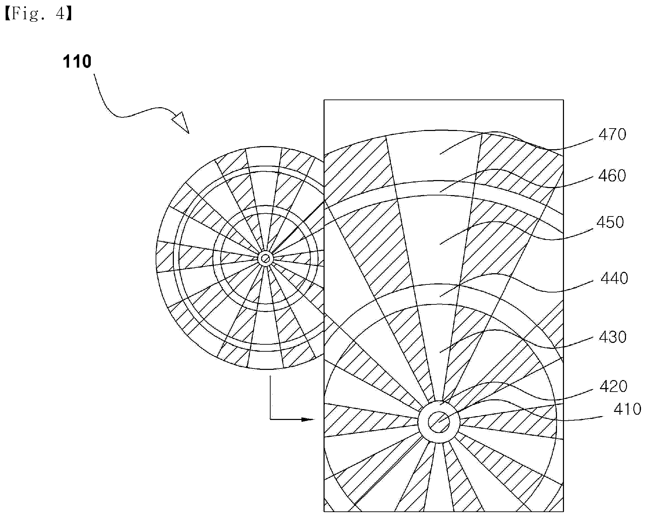

FIG. 4 is a block diagram illustrating a dart target according to the exemplary embodiment of the present invention.

The dart target 110 has a plurality of score zones. Referring to FIG. 4, in one aspect of the present invention, in the plurality of score zones, a double bullseye 410 and a single bullseye 420, a small single having a fan-shaped small single 430 adjacent thereto, a triple ring 440 adjacent thereto, a large single 450 adjacent thereto, a double ring 460 adjacent thereto, and an outside area 470 at an outermost edge are positioned in a concentric circle shape according to a distance from the center of the dart target.

Hereinafter, the dart game apparatus providing a team dart game match-up mode according to an embodiment of the present invention will be described in more detail.

The control module 190 of the dart game apparatus may provide the dart game match-up mode between a plurality of teams each constituted by one or more players. The dart game match-up mode may be a dart game mode in which at lest one among the players includes the virtual dart game player. Further, each team may include at least one virtual dart game player.

The virtual dart game player may be a player adjusted through artificial intelligence (AI). Accurate rate for the dart target of the virtual dart game player may be different according to a level, random, or different according to a situation in which the virtual dart game player is placed and/or a predetermined player tendency of the virtual dart game player.

For example, it is assumed that the virtual dart game player needs to hit 15 point tripling. In this case, the accurate rate of the virtual dart game player may form a concentric circle based on the 15 point tripling. A probability that a high-level virtual dart game player will hit 15 point tripling may be high and a probability that the high-level virtual dart game player will hit an adjacent score zone may be rapidly lowered as being further from the 15 point tripling. However, a probability that a low-level virtual dart game player will hit 15 point tripling is lower than the probability in the case of the high-level virtual dart game player and an accurate probability may be gradually lowered as being further from 15 point tripling. Therefore, the probability that the low-level virtual dart game player will accurately hit 15 point tripling may be lower than the probability in the case of the high-level virtual dart game player. In this case, the dart game apparatus 100 may correct a level difference of an actual match-up dart game player to provide a more interesting dart game match-up mode. The above description is just an example and may include various methods that set the accurate rate according to the level of the virtual dart game player.

Further, for example, the virtual dart game player may randomly hit the score zone of the dart target 110. In this case, since the team dart game match-up mode is performed by a fortune, a user may play the game more excitingly.

Further, for example, the virtual dart game player may vary according to a progress situation of the game and/or a predetermined player tendency of the virtual dart game player. For example, it is assumed that when the player accurately hits 17 point tripling in the 01 game, the player wins the victory. In this case, a virtual dart game player having a tendency of "weak to tension" is nervous at an important time when the winning or losing is decided by one drawing operation, and as a result, the accurate rate for 17 point tripling may be rapidly lowered. Further, in the case of a virtual dart game player having a tendency of "lack of persistence" shows high accurate rate at an early stage of the match-up dart game and the accurate rate may be lowered as starting a second half. The aforementioned situations and tendencies are just an example and the accurate rate of the virtual dart game player may be configured by reflecting variation of accurate rate depending on a situation of an actual dart game player and/or accurate rate depending on a game play tendency so that the dart game player feels the game more realistically. In this case, the dart game apparatus 100 may provide a more realistic virtual team mate to the player of the dart game match-up mode and the dart game player may play the match-up dart game mode more realistically.

The control module 190 aggregates scores of respective players of each team for each team and compares team scores to decide the winning or losing, in the team dart game match-up mode. Further, the control module 190 determines whether each team member achieves an object of the 01 game for each team and compares the number of team members that achieve the object of the 01 game for each team to decide the winning or losing, in the case of the 01 game mode. The control module 190 compares a sum total of scores acquired by the team members for each team according to each game mode or compares the number of team members that achieve an object of a specific game mode for each team to decide the winning or losing. Further, the control module 190 compares whether a score acquired by aggregating the scores of the respective players first reaches a specific score for each team to decide the winning or losing. The above description is just an example and include an appropriate game scheme that may distinguish the winning or losing for each team.

Further, according to another embodiment of the present invention, the control module 190 may calculate the score at least partially based on an accurate hitting location of the dart pin of another team in the dart game match-up mode. For example, when the player accurately hits the dart pin at the same location at which another team accurately hits the dart pin, the control module 190 may given additional score to the corresponding player. The above description is just an example and various score calculating schemes may be used in the team match-up. This will be described below in more detail.

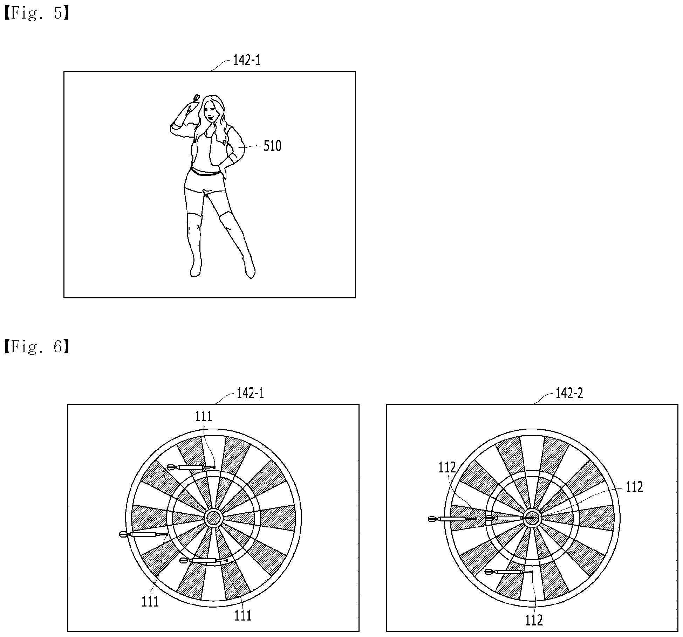

FIG. 5 illustrates a dart game image displayed in a display module according to an embodiment of the present invention.

The dart game image according to the embodiment of the present invention may include at least one of a dart game play image of an actual person, a dart game play animation image of a character of the actual person, and a dart game play animation image of a virtual character.

The actual person may include an entertainer, a famous dart player, a famous sportsman, a celebrity, and other actual persons. Further, the actual person may include even a dart game player recorded by a camera. The character of the actual person may include a character acquired by 3D-rendering or a character acquired by 2D-animating the entertainer, the famous dart player, the famous sportsman, the celebrity, and/or other actual persons. The virtual character may include animal characters such as Pororo, and the like, characters personifying things, and the like, a virtual animal character, and all characters created by other creations. The aforementioned characters are just an example and may include all types of characters which may be displayed on the display.

According to the embodiment of the present invention, the dart game image may include the actual person, the character of the actual person, and the dart game play image of the virtual character. Hereinafter, the actual person, the character of the actual person, and/or the virtual character are referred to as a dart game character 510. The display module 142 includes the monitor 142-1 to display the dart game character 510. In order to provide a sense of realism to the player of the dart game match-up mode that forms the team with the virtual dart game player, the display module 142 may display the dart game play image of the dart game character 510. Therefore, the dart game player may play the dart game match-up mode while feeling the sense of realism as if being in one space together with the virtual dart game player.

The dart game character 510 may perform a motion of playing the dart game. The dart game character 510 may perform various motions including a motion of preparing for drawing the dart pin, a motion of drawing the dart pin, a motion of being pleased with accurately hitting the dart pin, a motion of being disappointed with not accurately hitting the dart pin, a motion of being pleased with winning the victory in dart game match-up mode, a motion of being disappointed with suffering a defeat in the dart game match-up mode, a motion of cheering for the same teamwork, and a motion of jeering at a drawing opportunity of other teamwork. The above description is just an example and may include various motions which may be performed while playing the dart game.

The dart game character 510 may be expressed by a dart game play recording image of the corresponding actual person in the case of the actual person, a game play animation of the character of the actual person 3D-rendered through motion recognition in the case of the character of the actual person, a game play animation of the character of the actual person drawn in a 2D animation scheme, a play animation of the virtual character 3D-rendered in the case of the virtual character, and a scheme of a game play animation image of the virtual character drawn in the 2D animation scheme. The aforementioned expression scheme is just an example and various expression schemes that may express the play of the dart game character 510 may be used.

FIG. 6 illustrates a dart game image displayed in a display module according to another embodiment of the present invention.

When the dart game match-up mode is in progress, dart pins of both teams accurately hit the dart target 110 without distinction. Further, the dart pin of the virtual dart game player is difficult to be shown in the dart target 110. Therefore, there is a problem in that it is difficult for the player to clearly determine a current situation. In order to solve such a problem, the display module 142 may display an image in which the dart pin accurately hits the dart target for each team. The display module may display the image in which the dart pin accurately hits the dart target by distinguishing each team. The display module 142 may display images in which the dart pins of all teams accurately hit the dart target simultaneously for all teams or in order for each team. The display module 142 may display an accurate hitting situation of the dart pin simultaneously for all teams or for each team. Therefore, the player may clearly know the current situation and the score.

According to the embodiment of the present invention, the display module 142 may express an accurate hitting location of the dart pin for each team in the image of the dart target 110 for each team. For example, the dart target 110 is displayed for each team to display a dart pin 111 of a first team to accurately hit the dart target 110 of the first team and display a dart pin 112 of a second team to accurately hit the dart target 110 of the second team. Further, the display module 142 may display the dart pins 111 and 112 of the respective teams in one dart target 110 by distinguishing the color or by marking a name of each team. Further, the display module 142 may display the accurate hitting location of the dart pin simultaneously for all teams or in order for each team. The aforementioned display scheme is just an example and an appropriate scheme that may display the accurate hitting situation of the dart pin of each team may be used.

According to the embodiment of the present invention, the display module 142 may include a plurality of monitors 142-1, 142-2, and 142-3. The dart game apparatus 100 may express the accurate hitting situation of the dart pin for each team in the plurality of monitors 142-1 and 142-2. For example, the first monitor 142-1 may display the accurate hitting situation of the dart pin 111 of the first team and the second monitor 142-2 may display the accurate hitting situation of the dart pin 112 of the second team. Further, a screen of one monitor is segmented to display the accurate hitting situation of the dart pin for each team in the image of the dart target 110 for each team. The aforementioned display scheme is just an example and an appropriate scheme that may display the accurate hitting situation of the dart pin of each team may be used.

Further, the accurate hitting of the dart pin may be expressed by a scheme that displays an image in which the dart pin 111 hits the dart target 110 or displays the accurate hitting location of the dart pin in the dart target 110 as a point, and the like. Further, according to the embodiment of the present invention, the dart game apparatus 100 image-processes the image acquired by recording the dart target 110 with the camera 150 to recognize the dart pins 111 and 112 of each team. The image-processed recorded image may include a recorded image image-processed to show only the dart pin 111 of the first team in the recorded image and a recorded image image-processed to show only the dart pin 112 of the second team in the recorded image. The aforementioned images may be displayed in order for each team or the images of all teams may be simultaneously displayed. The display module 142 may display the image-processed recorded image for each team. The expression of the dart pin is just an example and an appropriate expression scheme that may express a location at which the dart pin accurately hits the dart target may be used.

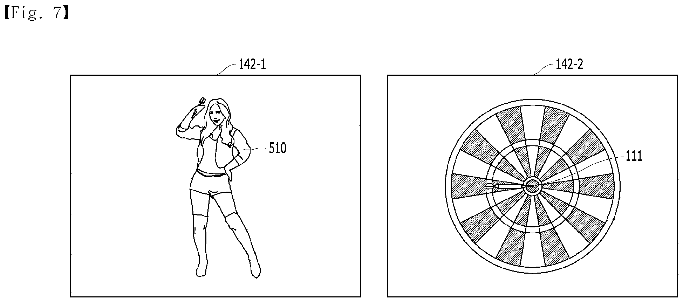

FIG. 7 illustrates a dart game image displayed in a display module according to yet another embodiment of the present invention.

As described above the display module 142 may include the plurality of monitors 142-1, 142-2, and 142-3. In the embodiment of the present invention, in the plurality of monitors, a first monitor 142-1 may output the dart game play image and a second monitor 142-2 may output the dart game image inter-correlated with the dart game play image output in the first monitor. For example, the first monitor 142-1 may output the dart game play image of the dart game character 510 and the second monitor 142-2 may output the dart game image inter-correlated with the dart game player image of the dart game character. If the first monitor outputs the motion in which the dart game character 510 draws the dart pin, the second monitor may output the image in which the dart pin drawn by the dart game character accurately hits the dart target 110. The dart game character 510 may horizontally draw the dart pin 111 of the dart game apparatus 100. Alternatively, in order to provide a higher sense of realism to the dart game player, the dart game character 510 may draw the dart pin 111 from the first monitor 142-1 positioned at a lower end of the dart target 110 to the second monitor 142-2 positioned at an upper end of the dart target 110. In this case, the first monitor may inter-correlatively display that the dart pin 111 drawn by the dart game character 510 accurately hits the dart target 110 of the second monitor. Further, both images are synchronized with each other, and as a result, it may be expressed that the dart pin drawn by the dart game character 510 is shown in the second monitor at the moment when the dart pin disappears in the first monitor and the dart pin accurately hits the dart target 110. The aforementioned expression scheme is just an example and various schemes that may express the dart game image by using the plurality of monitors may be included in the present invention. Further, the aforementioned deployment of the monitors is just an example and the monitors may be deployed in the dart game apparatus by various schemes.

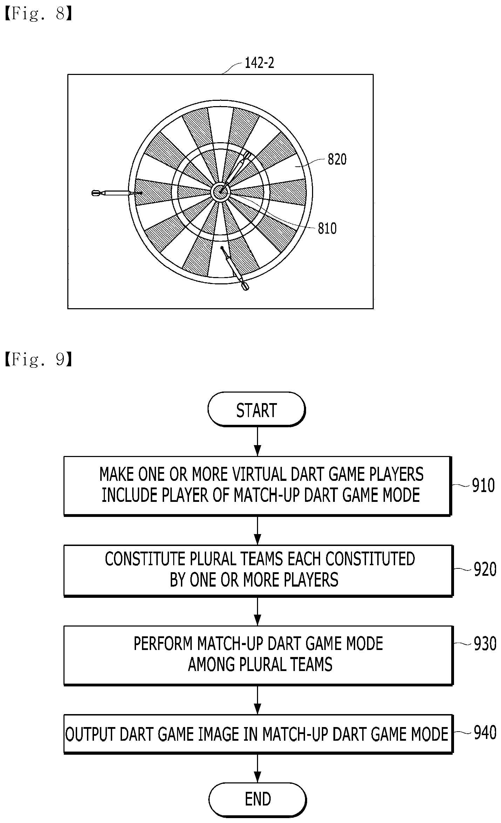

FIG. 8 illustrates a dart target for describing a method that calculates a score in a dart game match-up mode according to an embodiment of the present invention.

According to the embodiment of the present invention, the control module 190 may calculate the score at least partially based on an accurate hitting location of the dart pin of another team in the dart game match-up mode. The match-up mode is performed by a plurality of teams' drawing the darts. Accordingly, the control module 190 may partially refer to the accurate hitting location of the dart pin of another team when calculating the score.

For example, referring to FIG. 8, the dart target 110 is present and 3 dart pins of a counterpart accurately hit the dart target 110. The location of the dart pin of the counterpart may be displayed in the monitor 142-2 according to the embodiment of the present invention. In a drawing opportunity of the team of the player, when the dart pin accurately hits an accurate hitting location 810 of the counterpart dart pin, the control module 190 may grant an additional score to the corresponding drawing. When the dart pin drawn by the player accurately hits a location 820 which the counterpart dart accurately hits, the control module 190 may grant a general score.

Further, the accurate hitting location 810 of the dart pin of the counterpart team is set as a dead zone and when the dart pin duplicatively accurately hits the accurate hitting location 810 of the dart pin of the counterpart team in the drawing opportunity of the player, the control module 190 may not grant the score to the corresponding drawing. The dead zone may be a scheme in which all of small single 430, tripling 440, large single 450, and doubling 460 become dead zones with respect to the accurate hitting location 810 of the dart of the counterpart team, a score board of the dart target 110 adjacent thereto, or the score of the corresponding accurate hitting location. In the case of the game scheme, the dead zone increases with the progress of the game and the location 820 which the dart pin of the counterpart team does not accurately hit, which may acquire the score may be reduced. Therefore, a team that preoccupies a high score zone at the early stage may stand an advantageous position. Further, the dart game apparatus 100 may provide a ground conquer scheme game mode of the dart target 110 by using the dead zone scheme. The aforementioned game scheme is just an example and various schemes that may calculate the score at least partially based on the accurate hitting location of the dart pin of another team may be included in the present invention.

Further, according to the embodiment of the present invention, the control module 190 may calculate the score at least partially based on a previous accurate hitting location of the team of the player. In a previous drawing opportunity of the team of the player, when the dart pin accurately hits the accurate hitting location 810 of the team of the player in a previous drawing opportunity, the control module 190 may grant an additional score to the corresponding drawing. The aforementioned score calculating scheme is just an example and various schemes that may calculate the score at least partially based on the previous accurate hitting location of the dart pin may be included in the present invention.

FIG. 9 illustrates a method for providing a dart game match-up mode according to an embodiment of the present invention.

In the embodiment of the present invention, the method may be performed by the dart game apparatus, for example. Further, the dart game apparatus may manage a group of one or more dart game apparatuses and communicate with the dart game apparatus and/or the server through the communication module.

In addition, each step of the flowchart illustrated in FIG. 9 is not required and some steps may be omitted or added as necessary.

The dart game apparatus 100 may make the player of the dart game match-up mode to include one or more virtual dart game players (910). The virtual dart game player may be displayed as the image. The image of the virtual dart game player may include a recording image of an actual person, an animation image of a character of the actual person, and an animation image of a virtual character. The dart game apparatus 100 may select the virtual dart game player randomly, through user selection of the dart game player, or at least partially based on information on the dart game player of each team.

The dart game apparatus 100 may constitute a plurality teams each constituted by one or more players (920). The dart game apparatus 100 may constitute the plurality teams each constituted by one or more players for match-up. The player may be a real player or a virtual player. Each team may be constituted only by the real player, only by the virtual player, or by the virtual or real player. Further, each team may include one or more virtual dart game players.

The dart game apparatus 100 may perform the dart game match-up mode among the plurality of teams (930). As described above, the dart game apparatus 100 may provide a game mode in which the plurality of teams competes with ach other to the player. As described above, the dart game match-up mode may be performed by a scheme of comparing a total sum of scores acquired by team members for each team. Further, the dart game apparatus 100 may determine the winning or losing of the team dart game match-up mode by a scheme of comparing the number of team members that achieve a specific object of the game when the dart game match-up mode is performed in a game mode to achieve the specific object like the 01 game mode. The aforementioned game mode is just an example and various game schemes in which the plurality of teams compete with each other to decide the winning or losing are included in the present invention.

Further, according to the embodiment of the present invention, the dart game apparatus 100 may calculate the score at least partially based on the accurate hitting location of the dart pin of another team in the dart game match-up mode. In this case, a score calculating scheme may be a scheme in which when the dart pin accurately hits the accurate hitting location of the counterpart team in the drawing opportunity of the team of the player, an additional score is not provided or no score is provided by setting the accurate hitting location of the counterpart team as the dead zone. The aforementioned score calculating scheme is just an example and various schemes that calculate the score at least partially based on the accurate hitting location of the dart pin of the counterpart team in the match-up among the teams may be used.

The display module 142 of the dart game apparatus 100 may output the dart game image in the dart game match-up mode (940).

According to the embodiment of the present invention, the dart game image may include at least one of a dart game play image of an actual person, a dart game play animation image of a character of the actual person, and a dart game play animation image of a virtual character. As described by referring to FIG. 5, the dart game character 510 may express various motions. Further, as described above, the display module 142 may display various images including the dart game play recording image of the actual person, the animation of the character of the actual person, the animation image of the virtual character, and the like.

In addition, according to the embodiment of the present invention, the dart game image may include the image in which the image in which the dart pin accurately hits the dart target is displayed for each team. As described by referring to FIG. 6, the image may display the accurate hitting situation of the dart pin for each team through the plurality of monitors 142-1, 142-2, and 142-3. Further, the image may display the accurate hitting situation of the dart pin for each team by dividing one monitor. In addition, the image may display the accurate hitting situation of the dart pin for each team in the dart target 110 by distinguishing the dart pin with a color or a marker for each team. The aforementioned display scheme is just an example and an appropriate display scheme that may display the accurate hitting situation of the dart pin of each team may be used.

Further, according to the embodiment of the present invention, the display module 142 may include the plurality of monitors 142-1, 142-2, and 142-3. The dart game apparatus 100 may output the dart game image by using the plurality of monitors. As described by referring to FIG. 7, in the plurality of monitors, the first monitor 142-1 may output the dart game play image and THE second monitor 142-2 may output the dart game image inter-correlated with the dart game play image output in the first monitor. For example, the inter-correlated dart game images may be expressed as an image in which in the first monitor 142-1, the dart game character 510 draws the dart pin and the drawn dart pin accurately hits the dart target 110 displayed in the second monitor 142-2.

It will be appreciated by those skilled in the art that information and signals may be expressed by using various different predetermined technologies and techniques. For example, data, instructions, commands, information, signals, bits, symbols, chips which may be referred to in the above description may be expressed by voltage, current, electromagnetic waves, magnetic fields, or particles, optical fields or particles, or predetermined combinations thereof.

Those skilled in the art of the present invention will appreciate that various exemplary logic blocks, modules, processors, means, circuits, and algorithm steps can be implemented by electronic hardware, various types of programs or design codes (designated as "software" herein for easy description), or a combination thereof described in association with the exemplary embodiments disclosed herein. In order to clearly describe the intercompatibility of the hardware and the software, various exemplary components, blocks, modules, circuits, and steps have been generally described above in association with functions thereof. Whether the functions are implemented as the hardware or software depends on design restrictions given to a specific application and an entire system. Those skilled in the art of the present invention may implement functions described by various methods with respect to each specific application, but it should not be analyzed that the implementation determination departs from the scope of the present invention.

Various aspects or features presented herein may be implemented as manufactured articles using a method, an apparatus, or a standard programming and/or engineering technique. The term "manufactured article" includes a computer program, a carrier, or a medium which is accessible by a predetermined computer-readable device. For example, a computer-readable medium includes a magnetic storage device (for example, a hard disk, a floppy disk, a magnetic strip, or the like), an optical disk (for example, a CD, a DVD, or the like), a smart card, and a flash memory device (for example, an EEPROM, a card, a stick, a key drive, or the like), but is not limited thereto. Further, various storage media presented herein include one or more devices and/or other machine-readable media for storing information. The term "machine-readable media" include a wireless channel and various other media that can store, posses, and/or transfer command(s) and/or data, but are not limited thereto.

It will be appreciated that a specific order or a hierarchical structure of steps in the presented processes is one example of exemplary accesses. It will be appreciated that the specific order or the hierarchical structure of the steps in the processes within the scope of the present invention may be rearranged based on design priorities. Appended method claims provide elements of various steps in a sample order, but it does not mean that the method claims are limited to the presented specific order or hierarchical structure.

The description of the presented embodiments is provided so that those skilled in the art of the present invention use or implement the present invention. It will be apparent to those skilled in the art that various modifications of the embodiments will be apparent to those skilled in the art and general principles defined herein can be applied to other embodiments without departing from the scope of the present invention. Therefore, the present invention is not limited to the embodiments presented herein, but should be analyzed within the widest range which is associated with the principles and new features presented herein.

### [Best Mode]

As described above, related contents have been described in the best mode for carrying out the present invention.

### [Industrial Applicability]

The present invention may be used in a digital device, a dart device, a dart game device, an entertainment device, a dart server, and the like.

## Claims

1. A dart game apparatus comprising:
a control module providing a dart game match-up mode among a plurality of teams each constituted by one or more players; and
a display module outputting a dart game image in the dart game match-up mode,
wherein the dart game match-up mode is a dart game match-up mode in which at lest one among the players including a virtual game player.

2. The dart game apparatus of claim 1, wherein the dart game image includes at least one of a dart game play image of an actual person, a dart game play animation image of a character of the actual person, and a dart game play animation image of a virtual character.

3. The dart game apparatus of claim 1, wherein the dart game image includes an image in which an image in which a dart pin accurately hits a dart target is displayed for each team.

4. The dart game apparatus of claim 1, wherein the display module includes a plurality of monitors, and
a first monitor outputs the dart game play image and a second monitor outputs a dart game image inter-correlated with the dart game play image output on the first monitor.

5. The dart game apparatus of claim 1, wherein the display module includes a plurality of monitors, and
the respective monitors output the dart game images for respective teams.

6. The dart game apparatus of claim 1, further comprising:
a communication module capable of communicating with another dart game apparatus at a remote place,
wherein the dart game match-up mode is a dart game match-up mode including at least one player which plays the game at the remote place through the communication module.

7. The dart game apparatus of claim 1, wherein the team is constituted by one or more players and each team is able to include one or more virtual dart game players.

8. The dart game apparatus of claim 7, wherein the virtual dart game player is selected randomly, through user selection of the dart game player, or at least partially based on information on the dart game player of each team.

9. The dart game apparatus of claim 1, wherein the control module calculates a score at least partially based on an accurate hitting location of the dart pin of another team in the dart game match-up mode.

10. A method for providing a team dart game match-up mode in a dart game apparatus, the method comprising:
making a player of a dart game match-up mode include at least one virtual dart game player;
constituting a plurality of teams each constituted by one or more players;
performing the dart game match-up mode among the plurality of teams; and
outputting a dart game image in the dart game match-up mode.

11. A computer-readable medium storing following commands allowing a computer to provide a team dart game match-up mode, wherein the commands including:
a command for allowing the computer to make a player of a dart game match-up mode include at least one virtual dart game player;
a command for allowing the computer to constitute a plurality of teams each constituted by one or more players;
a command for allowing the computer to perform the dart game match-up mode among the plurality of teams; and
a command for allowing the computer to output a dart game image in the dart game match-up mode.
